# EUROPÄISCHE PATENTSCHRIFT

(11) **EP 2 549 125 B1**
(45) Veröffentlichungstag und Bekanntmachung des Hinweises auf die Patenterteilung: **28.12.2016**
(21) Anmeldenummer: 11006003.5
(22) Anmeldetag: 22.07.2011
(51) Int. Cl.: F15B 13/08, F16K 11/22, F16K 31/00, F16K 27/00

(54) **VENTILEINRICHTUNG**
VALVE DEVICE
DISPOSITIF DE VANNE

(43) Veröffentlichungstag der Anmeldung: 23.01.2013
(73) Patentinhaber: Festo AG & Co. KG, 73734 Esslingen (DE)
(72) Erfinder: Maichl, Martin, 73084 Salach (DE); Wirtl, Hannes, 86956 Schongau (DE); Dickhoff, Andreas, 73230 Kirchheim (DE)
(74) Vertreter: Patentanwälte Magenbauer & Kollegen Partnerschaft mbB

(56) Entgegenhaltungen:
- WO-A1-2009/118029
- DE-B3-102008 051 837
- DE-B3-102009 010 312
- KOSARZCECKI C: "FLOW FUNDAMENTALS SOME BASICS ON SOLENOID-OPENRATED DIRECTIONAL CARTRIDGE VALVES", MOTION SYSTEM - HYDRAULICS & PNEUMATICS, PENTON MEDIA, CLEVELAND, OH, US, Bd. 57, Nr. 8, 1. August 2004 (2004-08-01) , Seite 30,32/33, XP001200726, ISSN: 1543-6470

## Beschreibung

Die Erfindung betrifft eine Ventileinrichtung zur Beeinflussung einer Fluidversorgung fluidisch betreibbarer Verbraucher.

Aus der DE 10 2009 017 877 A1 ist eine Ventileinrichtung bekannt, die mehrere in einer Stapelrichtung aneinandergereihte Ventilmodule umfasst. Hierbei umfassen die Ventilmodule jeweils einen plattenförmigen Kanalkörper mit einer Speisekanalausnehmung und/oder einer Entlüftungskanalausnehmung sowie vier 2/2-Wegeventile, die jeweils einen ersten und einen zweiten Fluidanschluss aufweisen. Die vier 2/2-Wegeventile der Ventilmodule sind jeweils in einer Vollbrückenanordnung miteinander verschaltet. Dabei weisen die 2/2-Wegeventile in einer zu einer Bestückungsfläche parallelen Querschnittsebene einen länglichen Querschnitt auf, dessen Querschnittshaupterstreckung zumindest im Wesentlichen senkrecht zur Stapelrichtung ausgerichtet ist. Zudem sind die Querschnittshaupterstreckungen der 2/2-Wegeventile eines Ventilmoduls jeweils koaxial zueinander ausgerichtet.

Aus dem Artikel Kosarzcecki, Fundamentals - some basics on solenoid-operated directional cartridge valves, Motion System - Hadraulics and Pneumatics, Penton Media, Cleveland, Ohio, US, Band 57, Nr. 8, 1. August 2004 (2004-08-01), Seiten 30, 32, 33, XP001200726, ISSN: 1543-6470 ist ein 3/2-Wegeventil bekannt, bei dem in Abhängigkeit von einer Stellung eines durch Bereitstellung elektrischer Energie linear bewegbaren Ventilkörpers eine fluidisch kommunizierende Verbindung zwischen einem Eingangsanschluss und einem ersten oder einem zweiten Paar von Ausgangsanschlüssen hergestellt werden kann.

Die Aufgabe der Erfindung besteht darin, eine Ventileinrichtung bereitzustellen, die bei einfacher Aufbauweise eine verzögerungsarme fluidische Versorgung eines fluidisch betreibbaren Verbrauchers ermöglicht.

Diese Aufgabe wird für eine Ventileinrichtung der eingangs genannten Art mit den Merkmalen des Anspruchs 1 gelöst.

Hierbei ist vorgesehen, dass die Ventileinrichtung ein Ventilmodul mit einem Ventilgehäuse aufweist, in dem Ventilschächte zur Aufnahme von Ventilpatronen ausgebildet sind, sowie mit Ventilpatronen, die in den Ventilschächten angeordnet sind, wobei die Ventilschächte zusammen mit den darin aufgenommenen Ventilpatronen jeweils einen Druckraum begrenzen, der in fluidisch kommunizierender Verbindung mit einem zugeordneten Eingangsanschluss steht und wobei die Ventilpatronen jeweils zwei, separat ausgebildete, elektrisch ansteuerbare Ventilmittel umfassen, die jeweils dazu ausgebildet sind, einen freien Strömungsquerschnitt zwischen dem Druckraum und einem dem jeweiligen Ventilmittel zugeordneten Ausgangsanschluss zu beeinflussen.

Die im Ventilgehäuse als Ausnehmungen ausgebildeten Ventilschächte sind exemplarisch jeweils für die Aufnahme einer Ventilpatrone ausgebildet und weisen eine Geometrie auf, die zumindest im Wesentlichen der Außengeometrie der Ventilpatronen entspricht. Vorzugsweise sind alle Ventilpatronen einer Ventileinrichtung hinsichtlich ihrer Außengeometrie identisch ausgebildet, so dass die Ventilpatronen frei wählbar in die jeweiligen Ventilschächte des Ventilmoduls montiert werden können. Besonders vorteilhaft ist es, wenn die Ventilpatronen längs einer Haupterstreckungsachse einen konstanten, insbesondere rechteckigen, Querschnitt aufweisen. Somit können sie in die korrespondierend ausgebildeten Ventilschächte eingeschoben werden. Die Ventilpatronen sind derart ausgebildet, dass sie jeweils mit dem Ventilschacht einen Druckraum begrenzen. Der Druckraum kann exemplarisch als im Wesentlichen quaderförmiges Volumen ausgebildet sein, hierbei werden beispielsweise aneinander angrenzende Seitenwände des Druckraums vom Ventilschacht gebildet. Vorzugsweise wird wenigstens eine Stirnseite des Druckraums von der montierten Ventilpatrone gebildet. Hierdurch kann eine einfache Aufbauweise für die Ventilpatrone erreicht werden, da auf ein druckdichtes Patronengehäuse verzichtet werden kann. Vielmehr ist es ausreichend, wenn die Ventilpatrone den Ventilschacht derart abschließt, dass durch die Kombination der Ventilpatrone mit dem Ventilmodul der benötigte Druckraum gebildet wird. Der Druckraum weist erfindungsgemäß einen Eingangsanschluss auf, der für eine fluidisch kommunizierende Verbindung mit einer Fluidquelle oder einem Fluidauslass ausgebildet ist. Dementsprechend kann über den Eingangsanschluss entweder eine Zufuhr von druckbeaufschlagtem Fluid in den Druckraum oder eine Abfuhr von druckbeaufschlagtem fluid aus dem Druckraum vorgenommen werden.

Weiterhin sind dem Druckraum zwei Ausgangsanschlüsse zugeordnet, die für eine fluidische kommunizierende Verbindung mit fluidisch betreibbaren Verbrauchern, beispielsweise Aktoren, ausgebildet sind. Jedem der beiden Ausgangsanschlüsse ist ein elektrisch ansteuerbares Ventilmittel zugeordnet, das für die Beeinflussung eines freien Strömungsquerschnitts zwischen dem Druckraum und dem zugeordneten Ausgangsanschluss ausgebildet ist. Vorzugsweise kann mit Hilfe des Ventilmittels der freie Strömungsquerschnitt zwischen dem Druckraum und dem Ausgangsanschluss zwischen einer Sperrstellung und einer Freigabestellung eingestellt oder umgeschaltet werden. Dabei ist in der Sperrstellung eine kommunizierende Verbindung zwischen dem Druckraum und dem Ausgangsanschluss unterbrochen und in der Freigabestellung vollständig freigegeben.

Die Ventilmittel werden mittels eines elektrischen Steuersignals angesteuert, das von einer Steuereinrichtung bereitgestellt wird, die beispielhaft als Teil der Ventileinrichtung, insbesondere des Ventilmoduls ausgebildet sein kann oder die alternativ abseits der Ventileinrichtung ausgebildet ist. Bei dem Steuersignal kann es sich exemplarisch um eine elektrische Gleich- oder Wechselspannung oder um ein pulsweitenmoduliertes elektrisches Signal handeln.

Vorteilhafte Weiterbildungen der Erfindung sind in den Unteransprüchen angegeben.

Zweckmäßig ist es, wenn die Ventilmittel in der Ventilpatrone in einer gemeinsamen Bewegungsebene zwischen einer Sperrstellung und einer Freigabestellung bewegbar, insbesondere schwenkbeweglich bewegbar, sind, um den jeweiligen freien Strömungsquerschnitt zum zugeordneten Ausgangsanschluss zu beeinflussen. Durch die bewegliche Anordnung der beiden Ventilmittel in einer gemeinsamen Bewegungsebene kann eine besonders kompakte Gestaltung der Ventilpatronen erreicht werden. Sofern die beiden Ventilmittel zwischen der Sperrstellung und der Freigabestellung jeweils eine lineare Bewegung ausführen, sind die Bewegungsachsen für die beiden Ventilmittel in der gemeinsamen Bewegungsebene vorzugsweise parallel zueinander ausgerichtet. Sofern die beiden Ventilmittel zwischen der Sperrstellung und der Freigabestellung jeweils eine Schwenkbewegung ausführen, sind beide Schwenkebenen in der gemeinsamen Bewegungsebene angeordnet.

Bei einer Weiterbildung der Erfindung ist ein am Ventilgehäuse ausgebildeter Arbeitsanschluss, der für eine fluidisch kommunizierende Verbindung mit einem fluidischen betreibbaren Verbraucher ausgebildet ist, jeweils mit einem Ausgangsanschluss einer ersten Ventilpatrone und einem Ausgangsanschluss einer zweiten Ventilpatrone fluidisch kommunizierend verbunden, um am Arbeitsanschluss wahlweise eine fluidisch kommunizierende Verbindung mit dem Druckraum der ersten oder der zweiten Ventilpatrone zu ermöglichen. Hierbei kann beispielsweise vorgesehen sein, dass ein erster Druckraum, der von einer Kombination aus einem ersten Ventilschacht und einer darin aufgenommenen Ventilpatrone bestimmt wird, auf ein erstes fluidisches Druckniveau eingestellt wird und ein zweiter, entsprechend ausgebildeter Druckraum auf ein zweites fluidisches Druckniveau eingestellt wird. Durch die Kopplung jeweils eines Ausgangsanschlusses des ersten Druckraums mit einem Ausgangsanschluss des zweiten Druckraums kann dementsprechend am Arbeitsanschluss wahlweise durch entsprechende Ansteuerung der Ventilmittel, die den jeweiligen Ausgangsanschlüssen zugeordnet sind, das erste oder das zweite Druckniveau bereitgestellt werden. Da jede Ventilpatrone zwei Ventilmittel und zwei Ausgangsanschlüsse aufweist, können somit in vorteilhafter Weise mit zwei Ventilpatronen auch zwei Arbeitsanschlüsse jeweils mit den beiden Druckniveaus fluidisch angesteuert werden.

Bevorzugt weisen die Ventilmittel jeweils einen ersten, an der Ventilpatrone festgelegen Endbereich und einen zweiten, frei beweglich, insbesondere schwenkbeweglich, ausgebildeten Endbereich auf, der in der Sperrstellung für eine abdichtende Anlage an einem Ventilsitz und in der Freigabestellung für eine Freigabe des Ventilsitzes ausgebildet ist, wobei der Ventilsitz als Mündungsöffnung eines Ausgangskanals ausgebildet ist, der in den Druckraum mündet und mit einem Ausgangsanschluss verbunden ist. Bei einer derartigen Ausgestaltung der Ventilmittel wird die gewünschte Schwenkbewegung durch eine Krümmung des exemplarisch zungenförmig ausgebildeten Ventilmittels erreicht. Dabei verbleibt der fest eingespannte Endbereich ortsfest, während der frei bewegliche Endbereich des Ventilmittels durch die Änderung des Krümmungsradius an den Ventilsitz angehnähert oder von diesem entfernt werden kann. Die Änderung der Krümmung kann insbesondere durch Einleiten einer inneren mechanischen Spannung in das Ventilmittel erreicht werden, die durch das angelegte elektrische Steuersignal beeinflussbar ist.

In weiterer Ausgestaltung der Erfindung ist vorgesehen, dass die Ventilmittel als piezoelektrische Biegewandler ausgebildet sind. Vorzugsweise ist das Ventilmittel als Verbund aus einem biegeelastischen Trägermaterial, beispielsweise einem Metallstreifens, und einer darauf aufgebrachten Beschichtung aus einem piezoelektrischen Material ausgebildet. Die Schwenkbewegung des Biegewandlers wird durch Anlegen einer elektrischen Spannung an die Beschichtung aus piezoelektrischem Material hervorgerufen, das sich vorzugsweise zusammenzieht und somit die gewünschte innere mechanische Spannung auf das Ventilmittel einleitet. Somit ändert dieses seinen Krümmungsradius, wodurch aufgrund der einseitigen Einspannung eine Schwenkbewegung des freien Endes stattfindet. Hierdurch ist eine präzise Einstellung der Schwenkbewegung des jeweiligen Ventilmittels anhand des bereitgestellten elektrischen Steuersignals möglich. Vorzugsweise ist das Steuersignal Bestandteil einer Regelschleife, so dass die Schwenkbewegung des Ventilmittels und somit auch der freie Strömungsquerschnitt frei und an den Fluidbedarf des angeschlossenen fluidisch betreibbaren Verbrauchers angepasst bereitgestellt werden kann.

Vorzugsweise liegt der Biegewandler beabstandet zum ersten Endbereich auf einem Justiermittel auf, das an der Ventilpatrone abgestützt ist und das zur Einstellung einer Vorzugslage des frei beweglichen Endbereichs des Biegewandlers in der Bewegungsebene ausgebildet ist. Mit Hilfe des Justiermittels können beispielsweise Fertigungstoleranzen des Biegewandlers und/oder der Befestigung des Biegewandlers in der Ventilpatrone ausgeglichen werden. Durch die Möglichkeit zur nachträglichen Kompensation von Fertigungstoleranzen können die Anforderungen an die Herstellung der Biegewandler und der Montage der Biegewandler in die Ventilpatrone auf einem kostengünstigen Niveau gehalten werden. Das Justiermittel ist zur Einleitung einer Kraft auf den Biegewandler in der Bewegungsebene ausgebildet, wobei die Kraft vorzugsweise normal zu einer dem Justiermittel gegenüberliegenden Oberfläche, insbesondere normal zu einer größten Oberfläche, des Biegewandlers ausgerichtet ist und bevorzugt vom Justiermittel in Richtung des Biegewandlers weist. Durch diese Kraft, die beabstandet von der Einspannstelle des Biegewandlers wirkt, kann die Krümmung des Biegewandlers derart beeinflusst werden, dass dieser eine vorgebbare Vorzugsstellung einnimmt.

Bei einer Weiterbildung der Erfindung weist das Justiermittel in der Bewegungsebene eine Krümmung auf, die zur Einstellung der Vorzugslage des frei beweglichen Endbereichs des Biegewandlers einstellbar ist, insbesondere durch lokale Energiezufuhr mittels eines Energiestrahls. Bei dem Justiermittel handelt es sich exemplarisch um einen Materialstreifen, insbesondere einen Bandmetallstreifen, der am Gehäuse der Ventilpatrone und am Biegewandler abgestützt ist und hierdurch eine Krafteinleitung vom Gehäuse auf den Biegewandler ermöglicht. Das Justiermittel ist zumindest bereichsweise gekrümmt ausgebildet, wobei die Krümmung durch eine plastische Deformation des Justiermittels veränderbar ist, um eine Einstellung der Kraft auf den Biegewandler zu ermöglichen. Die plastische Deformation kann beispielsweise durch eine unmittelbare Krafteinleitung auf das Justiermittel oder alternativ durch lokale Erwärmung, insbesondere mit Hilfe eines Energiestrahls, vorgenommen werden. Durch die lokale Erwärmung kann eine Veränderung von inneren Materialspannungen und damit die gewünschte Krümmungsänderung bewirkt werden.

Zweckmäßig ist es, wenn dem Biegewandler ein Federmittel zur Bereitstellung einer in der Bewegungsebene wirkenden Andruckkraft auf das Justiermittel zugeordnet ist. Das Federmittel gewährleistet eine sichere Anlage des Biegewandlers am Justiermittel, so dass unabhängig von der Lage und/oder vom Betriebszustand der Ventilpatrone stets die gewünschte Vorzugsstellung für den Biegewandler eingehalten werden kann. Vorzugsweise ist das Federmittel in der Art einer Blattfeder, insbesondere als Metallstreifen, ausgebildet und am Gehäuse der Ventilpatrone abgestützt. Besonders bevorzugt liegt das Federmittel an einer dem Justiermittel entgegengesetzten Oberfläche des Bewegungswandlers an.

Vorteilhaft ist es, wenn die Ausgangsanschlüsse an einer vorderen Stirnfläche der Ventilpatrone angeordnet sind und/oder wenn benachbart zu einer hinteren Stirnfläche der Ventilpatrone ein umlaufendes, insbesondere gummielastisch ausgebildetes, Dichtelement zur abdichtenden Aufnahme der Ventilpatrone im Ventilschacht ausgebildet ist. Hierdurch wird die Montage der Ventilpatrone in das Ventilmodul erleichtert. Exemplarisch werden die an der vorderen Stirnseite der Ventilpatrone angeordneten Ausgangsanschlüsse derart abdichtend an einer Vorderwand des Ventilschachts angeordnet, dass das Fluid in diesem Bereich nicht zwischen der Ventilpatrone und dem Ventilmodul aus dem Druckraum entweichen kann, sondern ausschließlich über die Ausgangsanschlüsse abgegeben wird. Der Ventilschacht, der für eine Montage der Ventilpatrone durch Einschieben längs einer Montageachse ausgebildet ist, weist längs der Montageachse einen Querschnitt auf, der auf den Querschnitt der Ventilpatrone längs der Montageachse abgestimmt ist. Vorzugsweise sind die Querschnitte von Ventilpatrone und Ventilschacht längs der Montageachse konstant, können jedoch auch einen gestuften Verlauf aufweisen. Jedenfalls wird der Druckraum an einem den Ausgangsanschlüssen abgewandten Endbereich vorzugsweise durch eine Stirnwand der Ventilpatrone begrenzt, die mittels des umlaufenden Dichtelements abdichtend im Ventilschacht festgelegt werden kann.

In weiterer Ausgestaltung der Erfindung ist an einer hinteren Stirnfläche der Ventilpatrone eine Kontakteinrichtung angeordnet, die für eine elektrische Verbindung zwischen den elektrisch ansteuerbaren Ventilmitteln und einer, insbesondere als Busteilnehmer in einem Bussystem konfiguierbaren, Ansteuerschaltung ausgebildet sind. Bei der Kontakteinrichtung kann es sich exemplarisch um eine Leiterplatte mit darauf angebrachten, als Kontaktflächen dienenden Leiterbahnen oder um ein Kunststoffteil in MID-Technik (molded interconnect device) handeln, bei dem elektrisch leitfähige Bereiche im Spritzgussverfahren an das Kunststoffteil angespritzt werden, oder um stirnseitig von der Ventilpatrone abragende Metallstifte handeln. Die Kontakteinrichtung stellt die elektrische Versorgung der beiden Ventilmittel in der Ventilpatrone sicher. Gegebenenfalls in der Ventilpatrone vorgesehene Sensormittel können ebenfalls über die Kontakteinrichtung mit elektrischer Energie versorgt werden und hinsichtlich ihrer Sensorsignale abgetastet werden. Die Ansteuerschaltung kann entweder unmittelbar am hinteren Endbereich der Ventilpatrone angeordnet sein oder ist vorzugsweise für eine Ansteuerung mehrerer Ventileinrichtungen vorgesehen. Bevorzugt ist die Ansteuerschaltung als Busteilnehmer in einem Bussystem konfigurierbar, beispielsweise in einem Feldbussystem, bei dem eine Informationsübertragung zwischen einer übergeordneten Steuereinrichtung oder Maschinensteuerung und der Ansteuerschaltung gemäß einem vorgebbaren Busprotokoll vorgesehen ist.

Vorzugsweise sind jeweils zwei Ventilpatronen fluidisch zu zwei 3/3-Wegeventilen verbunden. Hierdurch wird mit einem geringen baulichen Aufwand für die Ventilpatronen und das Ventilmodul eine vorteilhafte Funktionalität erreicht. Für die Bereitstellung der zwei 3/3-Wegeventile werden lediglich zwei Druckräume benötigt, die von den jeweiligen Ventilpatronen zusammen mit dem Ventilmodul begrenzt werden. Die Ventilpatronen weisen hinsichtlich der Ventilmittel einen einheitlichen Aufbau auf, was ebenfalls zu einer baulichen Vereinfachung und einer kostengünstigen Herstellungsweise führt.

Bevorzugt umfasst die Ventileinrichtung ein Hauptventilmodul, das wenigstens ein fluidisch ansteuerbares Hauptventil aufweist, das ein beweglich in einem Ventilraum aufgenommenes Ventilglied und ein mit dem Ventilglied gekoppeltes, beweglich in einer Vorsteuerkammer aufgenommenes Stellglied umfasst, wobei die Vorsteuerkammer mit einem Arbeitsanschluss des Ventilmoduls verbunden ist und eine Position des Stellglieds und des damit gekoppelten Ventilglieds in Abhängigkeit von einer Druckbeaufschlagung der Vorsteuerkammer einstellbar ist, um mittels des Ventilglieds einen freien Strömungsquerschnitt im Ventilraum einzustellen. Bei dieser Ausgestaltung der Ventileinrichtung dient das Ventilmodul zur fluidischen Ansteuerung der jeweils zugeordneten Hauptventile, die ihrerseits für eine Beeinflussung eines freien Strömungsquerschnitts durch den jeweiligen Ventilraum ausgebildet sind. Dabei kann das Ventilglied des Hauptventils vorzugsweise zwischen einer Sperrstellung und einer Freigabestellung für den Ventilraum bewegt werden, um wahlweise eine vollständige Blockierung des freien Strömungsquerschnitts durch den Ventilraum oder eine teilweise oder vollständige Freigabe des freien Strömungsquerschnitts zu bewirken. Das Ventilglied des Hauptventils ist mit einem Stellglied gekoppelt, insbesondere einstückig ausgebildet, wobei das Stellglied die Aufgabe hat, eine Kraft auf das Ventilglied einzuleiten und damit eine Bewegung des Ventilglieds hervorzurufen. Die eingeleitete Kraft wird durch das Fluid bereitgestellt, das von der Ventileinrichtung über den Arbeitsanschluss an die Vorsteuerkammer bereitgestellt wird, in der das Stellglied beweglich aufgenommen ist. Das Stellglied ist vorzugsweise in der Art eines Arbeitskolbens ausgebildet, der eine vom Druck des bereitgestellten Fluids abhängige Kraft auf das Ventilglied einleitet.

Zweckmäßig ist es, wenn dem Ventilglied und/oder dem Stellglied eine Federeinrichtung für eine Bereitstellung einer Federkraft zugeordnet ist, um eine Vorzugsstellung des Ventilglieds im Ventilraum zu bestimmen. Hierdurch ist nur dann eine Bereitstellung von druckbeaufschlagtem Fluid in die Vorsteuerkammer notwendig, wenn eine Bewegung des Ventilglieds aus der Vorzugsstellung gewünscht ist.

In weiterer Ausgestaltung der Erfindung ist vorgesehen, dass jeweils ein Ventilmodul und ein Hauptventilmodul eine Ventilscheibe bilden, die längs einer Aufreihungsachse mit einer größten Außenfläche an eine benachbarte Ventilscheibe anreihbar ist, wobei die Ventilscheibe von wenigstens einer längs der Aufreihungsachse erstreckten Ausnehmung durchsetzt ist, die zur Bildung eines Fluidkanals vorgesehen ist. Hierdurch können mehrere Ventilscheiben in einfacher Weise zu einer kompakten Ventilanordnung zusammengefügt werden, bei der eine zentrale Zufuhr und/oder Abfuhr von Fluid durch den wenigstens einen, längs der Aufreihungsachse erstreckten, Fluidkanal vorgesehen ist. Vorzugsweise sind die Ventilscheiben quaderförmig ausgebildet, wobei umlaufend aneinandergrenzende Schmalseiten eine geringe Breitenausdehnung gegenüber den als größten Oberflächen ausgebildeten, einander entgegengesetzten Seitenflächen aufweisen. Beispielhaft sind die Kantenlängen der Seitenflächen um einen Faktor 5 bis 10 größer als die Breite der vier jeweils senkrecht zueinander ausgerichteten Schmalseiten.

Vorteilhaft ist es, wenn an einer Schmalseite der Ventilscheibe wenigstens ein Kontaktmittel abragt, das für eine elektrische Verbindung des Ventilmoduls und/oder des Hauptventilmoduls mit einer elektronischen Ansteuerschaltung und/oder mit einer elektronischen Steuereinrichtung ausgebildet ist. Durch die Anordnung des Kontaktmittels an der Schmalseite der jeweiligen Ventilscheibe kann bei einer ersten Ausführungsform der Ventileinrichtung die Ansteuerschaltung, die für eine Signalübertragung zwischen der elektronischen Steuereinrichtung und den Ventilmitteln vorgesehen ist, außerhalb der Ventilscheibe ausgebildet sein und dennoch auf kurzem Weg direkt auf die jeweiligen Ventilmittel zugreifen. Hierdurch wird in vorteilhafter Weise eine bauliche Trennung zwischen den elektrisch ansteuerbaren Ventilmitteln und der Ansteuerschaltung erreicht, so dass die Ansteuerschaltung im Fehlerfall schnell ausgetauscht werden kann oder durch Austausch der Ansteuerschaltung eine Veränderung der Funktionalität der jeweiligen Ventilscheibe und/oder eine Anpassung an unterschiedliche Anforderungen verschieden ausgeprägter Steuereinrichtungen erzielbar ist. Bei einer zweiten Ausführungsform der Ventileinrichtung ist die Ansteuerschaltung in der Ventilscheibe integriert ausgebildet und steht über das Kontaktmittel mit der elektronischen Steuereinrichtung in Verbindung. Dadurch kann ein langer elektrischer Übertragungsweg zwischen der Steuereinrichtung und der Ansteuerschaltung vermieden werden, da die integriert in der Ventilscheibe ausgebildete Ansteuerschaltung über die Kontaktmittel in unmittelbarem elektrischen Kontakt mit der Steuereinrichtung gebracht werden kann. Generell gilt, dass durch die seitlich abragenden Kontaktmittel die Anzahl der elektrischen Verbindungsstellen zwischen den Ventilmitteln und der Steuereinrichtung verglichen mit bekannten Ventileinrichtungen, bei denen eine elektrische Signalübertragung längs einer Aufreihungsachse für die Ventilscheiben vorgesehen ist und die Signale durch jede der Ventilscheiben hindurchgeschleift werden müssen, deutlich geringer ist, was sich auf die Zuverlässigkeit und auf die Geschwindigkeit der Signalübertragung zwischen Steuereinrichtung und Ventilmitteln positiv auswirkt.

Eine vorteilhafte Ausführungsform der Erfindung ist in der Zeichnung dargestellt. Hierbei zeigt:
- Figur 1: eine perspektivische Darstellung einer Ventileinrichtung,
- Figur 2: eine perspektivische Schnittdarstellung der Ventileinrichtung gemäß der Figur 1,
- Figur 3: eine perspektivische Darstellung eines Ventilgehäuses und der darin aufzunehmenden Ventilpatronen,
- Figur 4: eine perspektivische Explosionsdarstellung des Ventilgehäuses,
- Figur 5: eine geschnittene Draufsicht auf das Ventilgehäuse mit den darin aufgenommenen Ventilpatronen,
- Figur 6: eine perspektivische Explosionsdarstellung eines Unterteils der Ventilpatrone,
- Figur 7: eine perspektivische Explosionsdarstellung der Ventilpatrone,
- Figur 8: eine Schnittdarstellung der Ventilpatrone,
- Figur 9: eine perspektivische Darstellung der Ventilpatrone,
- Figur 10: ein pneumatisches Schaltbild für ein aus mehreren Ventilpatronen gebildetes Ventilmodul und
- Figur 11: eine Schnittdarstellung eines Hauptventils.

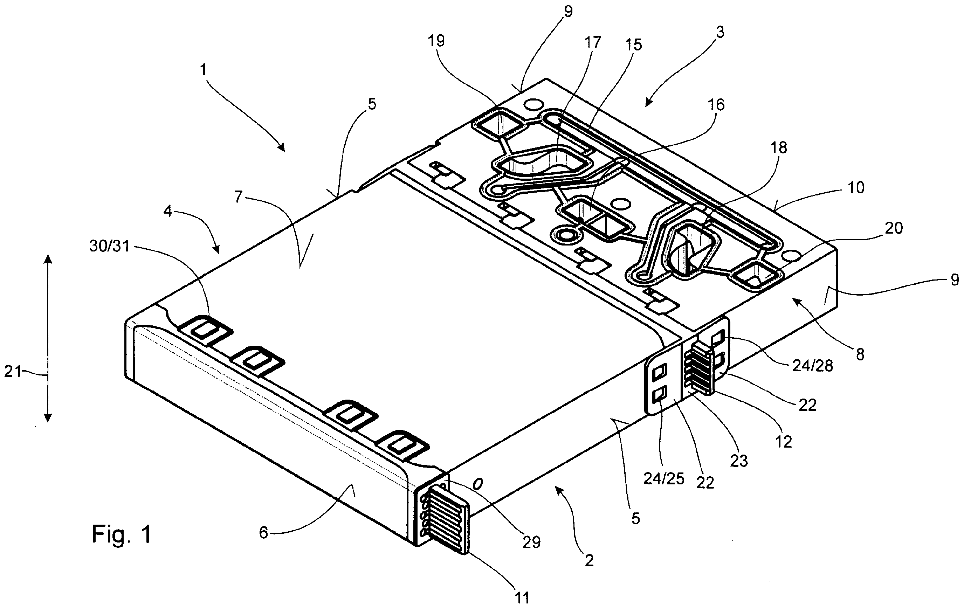

In der Figur 1 ist eine Ventilscheibe 1 dargestellt, die als Bestandteil einer nicht näher dargestellten Ventileinrichtung vorgesehen werden kann. Die Ventilscheibe 1 umfasst ein Ventilmodul 2 und ein damit verbundenes Hauptventilmodul 3. Das Ventilmodul 2, dessen Aufbau nachstehend näher beschrieben wird, umfasst ein Ventilgehäuse 4, das exemplarisch quaderförmig ausgebildet ist. Dabei ist eine kürzere Kantenlänge von Schmalseiten 5, 6 des Ventilgehäuses 4 erheblich kleiner als eine der Kantenlängen einer rechteckig ausgebildeten Seitenfläche 7 ausgebildet. Die Ventilscheibe 1 weist zwei einander entgegengesetzte Seitenflächen 7 auf, von denen in der Figur 1 aufgrund der gewählten Perspektive jedoch nur eine sichtbar ist. Die Seitenflächen 7 sind zur flächigen Anlage an Seitenflächen nicht dargestellter benachbarter Ventilscheiben vorgesehen, so dass durch Aneinanderreihung mehrerer Ventilscheiben 1 eine Ventileinrichtung geschaffen werden kann.

Das Hauptventilmodul 3, dessen Aufbau ebenfalls nachstehend näher beschrieben wird, umfasst ein Hauptventilgehäuse 8, das exemplarisch quaderförmig ausgebildet ist. Dabei ist eine kürzere Kantenlänge von Schmalseiten 9, 10 übereinstimmend mit der kürzeren Kantenlänge der Schmalseiten 5, 6 des Ventilgehäuses 4 gewählt. Quer zu den seitlichen Schmalseiten 5 und 9 der Ventilscheibe 1 ragen jeweils als Flachstecker 11, 12 ausgebildete Kontaktmittel ab, wobei der Flachstecker 11 elektrisch dem Ventilmodul 2 und der Flachstecker 12 elektrisch dem Hauptventilmodul 3 zugeordnet ist. Das Hauptventilgehäuse 8 weist mehrere Ausnehmungen 15, 16, 17, 18, 19, 20 auf, von denen einige das Hauptventilgehäuse 8 längs einer Aufreihungsachse 21 vollständig durchsetzen, um durch mehrere oder alle Ventilscheiben 1 einer nicht dargestellten Ventileinrichtung durchgehende Fluidkanäle auszubilden. Die von den Ausnehmungen 15 bis 20 gebildeten Fluidkanäle dienen exemplarisch zur Bereitstellung von druckbeaufschlagtem Fluid an die Ventilmodule 2 und/oder die Hauptventilmodule 3 oder zur Abfuhr von Fluid aus den Ventilmodulen 2 oder den Hauptventilmodulen 3.

Das Ventilmodul 2 ist mit dem Hauptventilmodul 3 durch elastische Riegelzungen 22 verbunden, die an einem zwischen dem Ventilmodul 2 und dem Hauptventilmodul 3 angeordneten Verbindungsteil 23 ausgebildet sind. Die Riegelzungen 22 weisen Ausnehmungen 24 auf, die an Riegelvorsprünge 25, 28 am Ventilmodul 2 und am Hauptventilmodul 3 angepasst sind und die eine formschlüssige Kopplung mit diesen Riegelvorsprüngen 25, 28 ausgebildet sind. Das Verbindungsteil 23 dient neben der mechanischen Kopplung des Hauptventilmoduls 3 mit dem Ventilmodul 2 auch der elektrischen Ankopplung nachstehend näher beschriebener Sensormittel des Hauptventilmoduls 3 mit einer nicht näher dargestellten Ansteuerschaltung und stellt den hierfür vorgesehenen Flachstecker 12 bereit. Vorzugsweise ist das Verbindungsteil 23 als Kunststoffspritgussteil mit einstückig angeformten Riegelzungen 22 ausgebildet. Besonders bevorzugt sind die elektrischen Verbindungen am Verbindungsteil 23 in MID-Technologie (molded interconnect device) hergestellt, also spritzgusstechnisch in das Verbindungsteil 23 eingebracht.

An der dem Hauptventilmodul 3 abgewandten Schmalseite des 6 des Ventilmoduls 2 ist ein weiteres Verbindungsteil 29 angeordnet, das für eine elektrische Kopplung der im Ventilgehäuse 4 aufgenommenen Ventilmittel mit der nicht dargestellten Ansteuerschaltung vorgesehen ist und das den hierfür vorgesehenen Flachstecker 11 bereitstellt. Das Verbindungsteil 29 weist Riegelzungen 30 auf, die für eine Verriegelung am Ventilgehäuse 4 vorgesehen sind, das hierzu entsprechend ausgebildete Riegelvorsprünge 31 aufweist. Vorzugsweise ist das Verbindungsteil 29 als Kunststoffspritzgussteil mit einstückig angeformten Riegelzungen 30 ausgebildet. Besonders bevorzugt sind die elektrischen Verbindungen am Verbindungsteil 29 in MID-Technologie (molded interconnect device) hergestellt, also spritzgusstechnisch in das Verbindungsteil 29 eingebracht.

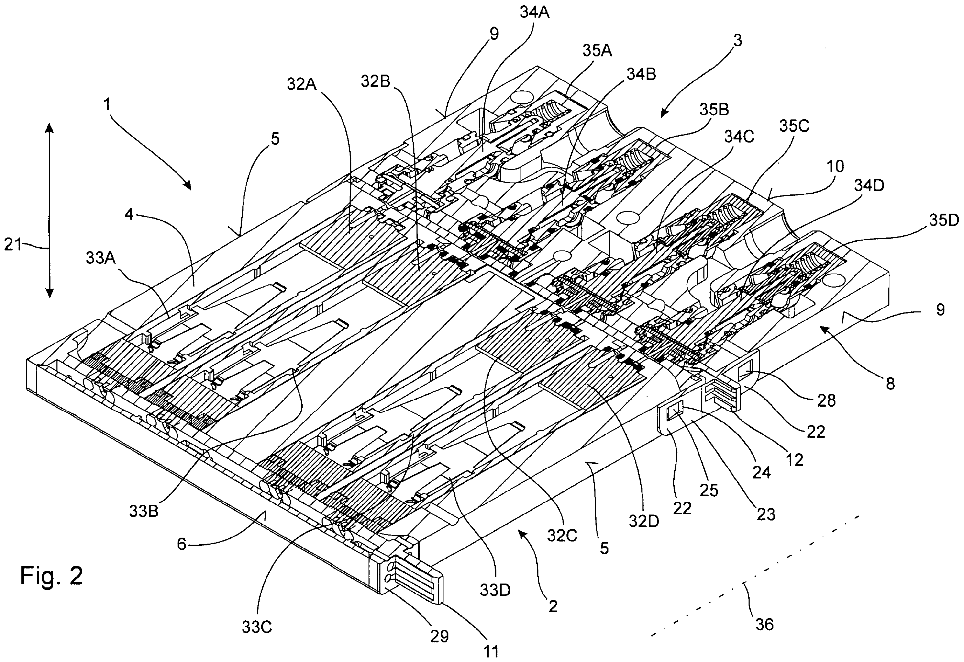

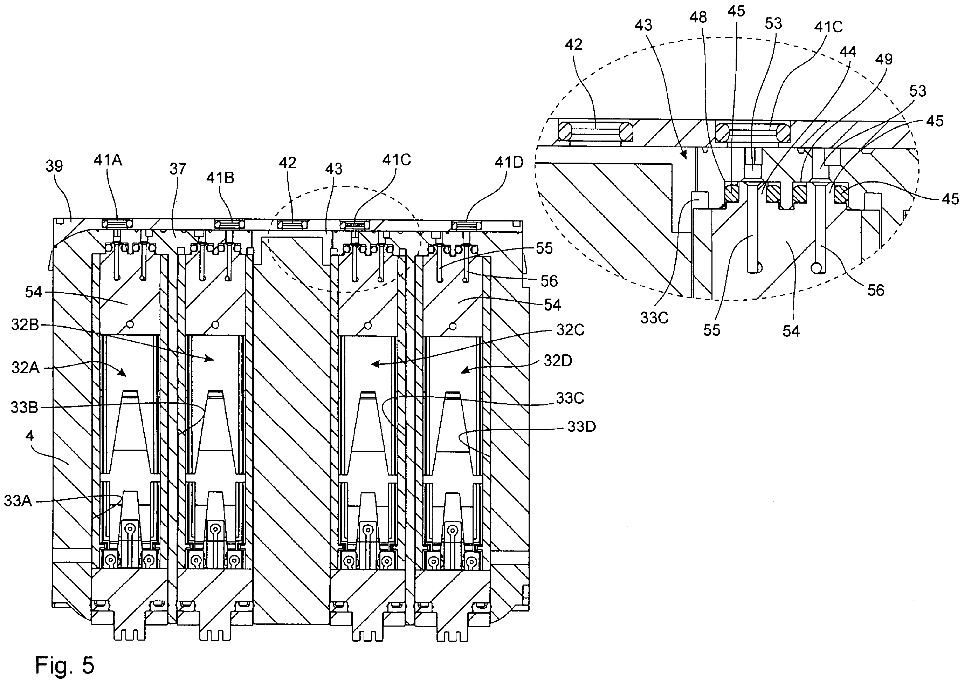

Aus der Schnittdarstellung gemäß der Figur 2 geht die Aufbauweise des Ventilmoduls 2 und des Hauptventilmoduls 3 näher hervor. Im Ventilgehäuse 2 sind exemplarisch vier Ventilpatronen 32 in Ventilschächten 33 des Ventilgehäuses 4 aufgenommen. Eine nähere Beschreibung des Ventilgehäuses 2 und der darin aufgenommenen Ventilpatronen 32 erfolgt nachstehend in Zusammenhang mit den Figuren 5 bis 9.

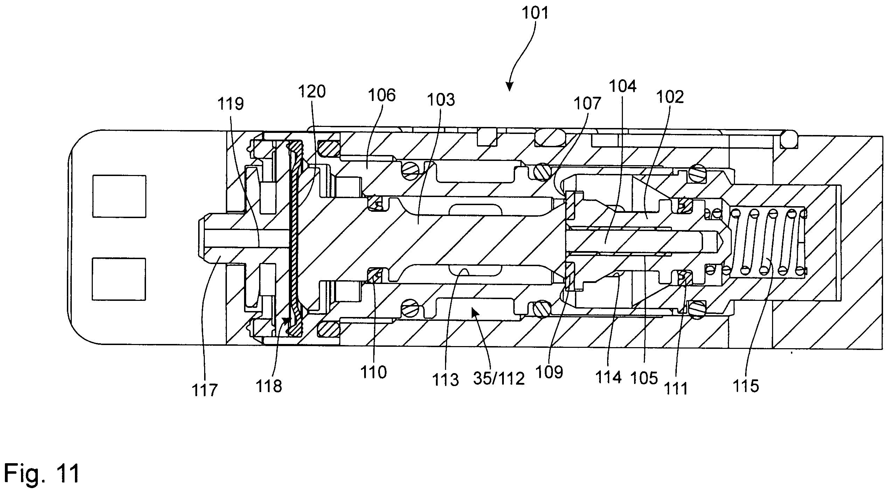

Im Hauptventilgehäuse 8 sind exemplarisch vier Hauptventilkörper 34 in Ventilausnehmungen 35 schiebebeweglich angeordnet. Eine nähere Beschreibung des Hauptventilgehäuses 8 und der darin aufgenommenen Hauptventilkörper 34 erfolgt nachstehend in Zusammenhang mit der Figur 11.

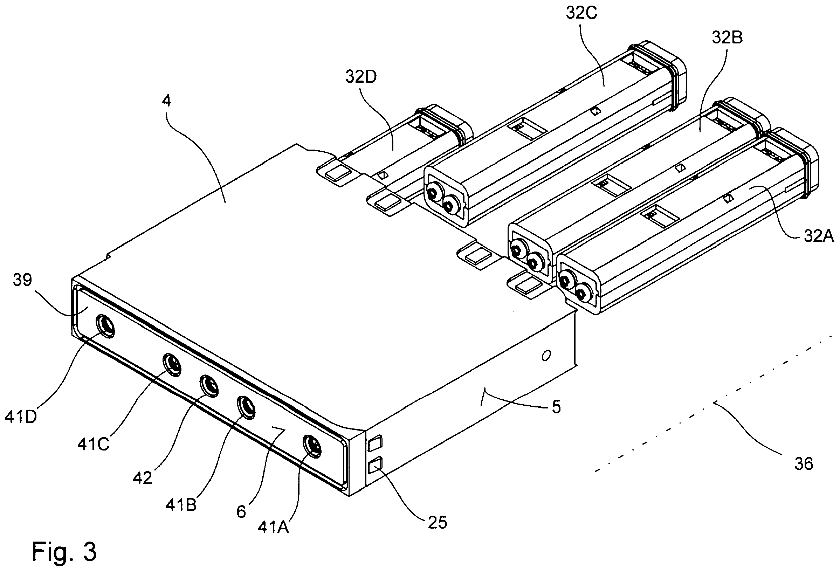

Aus der Figur 3 ist zu entnehmen, dass die Ventilpatronen 32, die bei Bedarf als Ventilpatronen 32A, 323B, 32C und 32D bezeichnet werden, exemplarisch quaderförmig ausgebildet sind. Hierdurch kann eine Montage der Ventilpatronen 32 in die Ventilschächte 33, die bei Bedarf als Ventilschächte 33A, 33B, 33C und 33D bezeichnet werden und aus der Figur 2 erkennbar sind, im Ventilgehäuse 4 durch Einschieben längs einer Montageachse 36 erfolgen. Die Ventilschächte 33 durchsetzen das Ventilgehäuse 4 längs der Montageachse 36 und sind an der Schmalseite 6, die zur Anlage an dem Verbindungsteil 23 vorgesehen ist, mit einer Abschlussplatte 37 verschlossen, die in der Figur 5 erkennbar ist. Vorzugsweise ist die Abschlussplatte 37 einstückig mit dem, insbesondere als Kunststoffspritzgussteil, hergestellten Ventilgehäuse 4 ausgebildet.

Die in Figur 5 dargestellte vordere Schmalseite 6 des Ventilgehäuses 4 weist mehrere nutartig vertieft ausgebildete Verteilerkanäle 40 auf, die bei Bedarf als Verteilerkanäle 40A, 403B, 40C und 40D bezeichnet werden und die in fluidisch kommunizierender Verbindung mit nicht näher dargestellten Durchbrüchen in der Abschlussplatte 37 stehen. Diese Durchbrüche stellen ihrerseits jeweils eine fluidisch kommunizierende Verbindung des jeweiligen Verteilerkanals 40 mit einem der Ventilschächte 33 her.

Exemplarisch ist vorgesehen, dass die Verteilerkanäle 40A und 40B in fluidisch kommunizierender Verbindung mit den Ventilschächten 33A und 33B stehen, ohne dass hierbei zunächst die Wirkung der Ventilpatronen 32 berücksichtigt wird. Weiterhin ist vorgesehen, dass die Verteilerkanäle 40C und 40D in fluidisch kommunizierender Verbindung mit den Ventilschächten 33C und 33D stehen, ohne dass hierbei zunächst die Wirkung der Ventilpatronen 32 berücksichtigt wird.

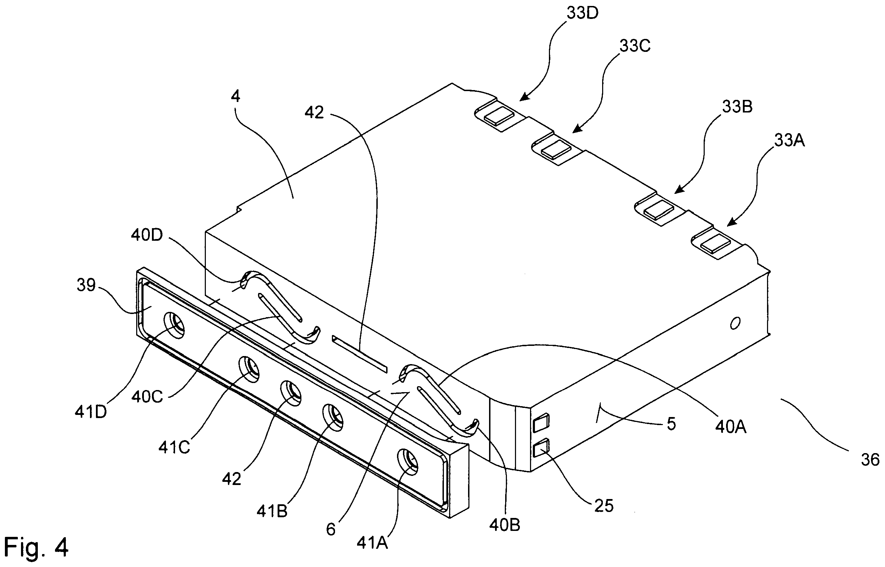

In der Figur 4 ist eine Verteilerplatte 39 dargestellt, die gemäß der Figur 3 auf die vordere Schmalseite 6 des Ventilgehäuses 4 aufgesetzt werden kann und die exemplarisch mit vier als Ausnehmungen ausgebildeten Arbeitsanschlüssen 41, die bei Bedarf als Arbeitsanschlüsse 41A, 41B, 41C und 41D bezeichnet werden, und einem Versorgungsanschluss 42 versehen ist. Die Verteilerplatte 39 kann abdichtend an der vorderen Schmalseite 6 des Ventilgehäuses 4 angebracht werden, so dass jeweils eine fluidisch kommunizierende Verbindung zwischen einem Verteilerkanal 40 und einem zugeordneten Arbeitsanschluss 41 gewährleistet ist. In gleicher Weise ist auch eine fluidisch kommunizierende Verbindung zwischen dem Versorgungsanschluss 42 und einem in der Abschlussplatte 37 ausgebildeten Versorgungsschacht 43 vorgesehen. Exemplarisch ist eine fluidisch kommunizierende Verbindung zwischen dem Versorgungsschacht 43 und den Ventilschächten 33B und 33C vorgesehen.

Bei einer nicht dargestellten Ausführungsform sind die die Verteilerkanäle zusammen mit den Arbeitsanschlüssen und dem Versorgungsanschluss in der Verteilerplatte ausgebildet. Dadurch kann die Abschlussplatte des Ventilgehäuses einfacher gestaltet werden und weist beispielsweise nur die Durchbrüche und den Versorgungsschacht auf.

In der Figur 5 ist erkennbar, wie der Versorgungsschacht 43 ausgehend vom Versorgungsanschluss 42 exemplarisch in die beiden Ventilschächte 33B und 33C mündet. Zudem geht aus der Figur 5 hervor, wie die Ventilpatronen 32 jeweils mit einem vorderen Endbereich an der Abschlussplatte 37 anliegen. Beispielhaft sind die Ventilmittel der Ventilpatronen 32 des Ventilmoduls 2, eventuell abgesehen von einer nachstehend näher beschriebenen Ventilvorzugsstellung (normal offen - normal geschlossen) baugleich ausgebildet, so dass sie prinzipiell in beliebiger Weise gegeneinander ausgetauscht werden können. Jede der Ventilpatronen 32 ist an einer vorderen Stirnseite exemplarisch mit zwei Ausgangsanschlüssen 44, 45 versehen, die beispielhaft in der Art von zylindrischen Stutzen von der vorderen Stirnseite der Ventilpatronen 32 abragen. Jeder der Ausgangsanschlüsse 44, 45 kann mit einem umlaufenden, vorzugsweise ringförmigen, insbesondere gummielastischen, Dichtmittel 47, beispielsweise einem O-Ring versehen sein. Bei der dargestellten Ausführungsform der Ventilpatronen 32 und des Ventilgehäuses 4 ist vorgesehen, dass an einer dem jeweiligen Ventilschacht 33 zugewandten Innenoberfläche 50 der Abschlussplatte 37 jeweils zwei zylindrische Ausnehmungen 48, 49 ausgebildet sind. Die zylindrische Ausnehmungen 48, 49 dienen jeweils zur abdichtenden Aufnahme der zugeordneten Ausgangsanschlüsse 44, 45 und sind ihrerseits mit den, insbesondere in der Detaildarstellung der Figur 5 erkennbaren, Durchbrüchen 53 fluidisch kommunizierend verbunden.

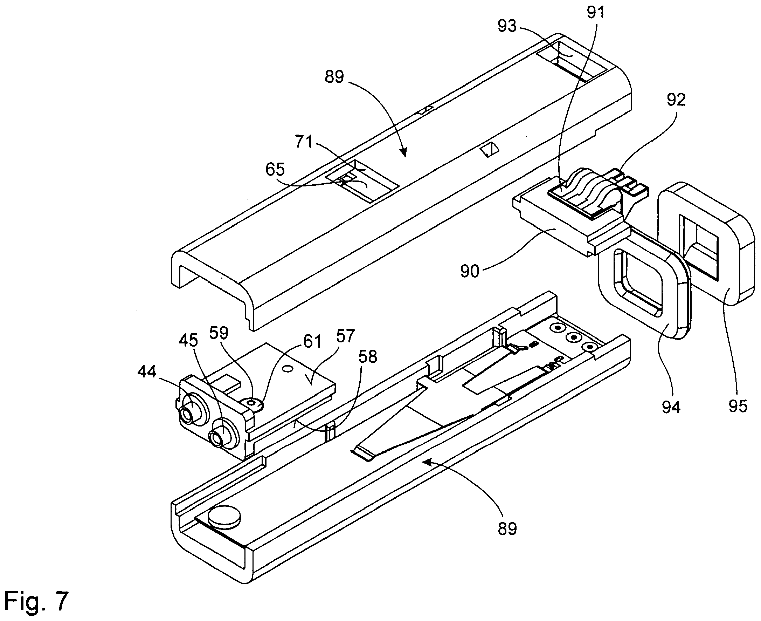

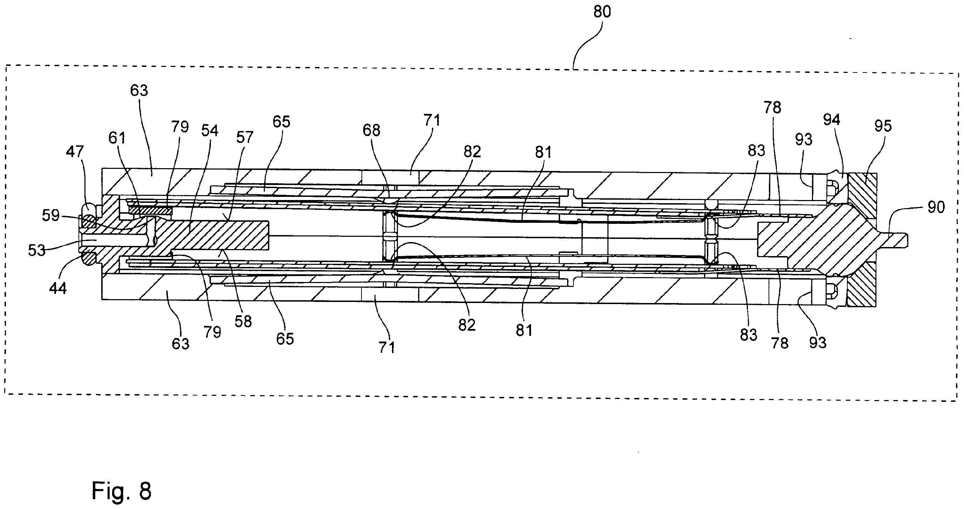

Die Ausgangsanschlüsse 44, 45 sind bei der in den Figuren 7 und 8 im Detail dargestellten Ventilpatrone 32 an einem Düsenblock 54 angeformt. Der, insbesondere in der Figur 7 näher dargestellte, Düsenblock 54 weist zwei Ausgangskanäle 55, 56 auf, die sich abschnittsweise ausgehend von den Ausgangsanschlüssen 44, 45 in Richtung des hinteren Endes der Ventilpatrone 32 erstrecken und dann jeweils in entgegengesetzte Richtungen rechtwinklig abgeknickt ausgebildet sind und an voneinander abweisenden Anlageflächen 57, 58 ausmünden, wie sie insbesondere in der Figur 8 dargestellt sind. Vorzugsweise ist die jeweilige Mündungsöffnung 59, 60 der Ausgangskanäle 55, 56 in einem von der jeweiligen Anlagefläche 57, 58 abragenden, exemplarisch kugelabschnittsförmigen Ventilsitz 61, 62 ausgebildet.

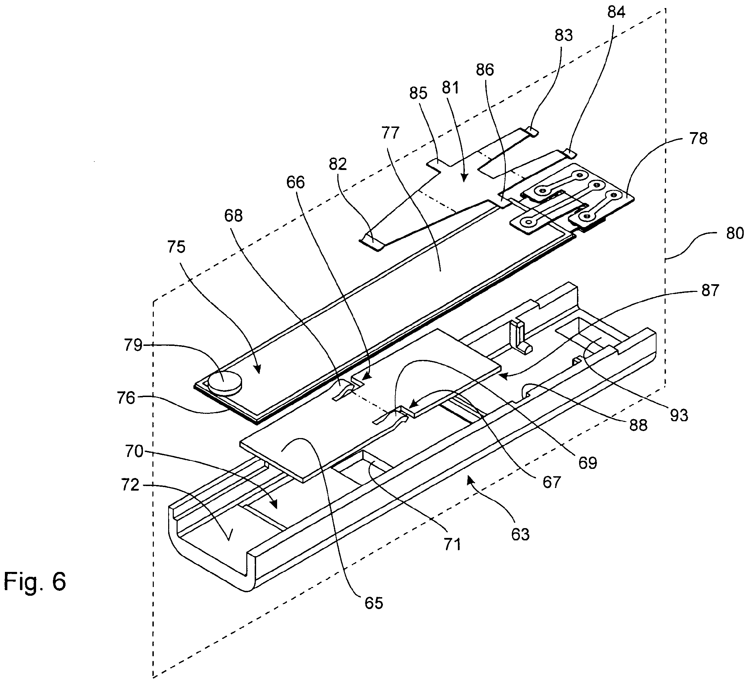

Die weiteren in der Figur 5 erkennbaren Komponenten der Ventilpatrone 32 werden im Zusammenhang mit der Beschreibung der Figuren 6 bis 8 näher erläutert. Exemplarisch weist die Ventilpatrone 32 zwei vorzugweise gleichartig ausgebildete Halbschalen 63 sowie darin aufgenommene, nachstehend näher beschriebene Einzelteile auf.

In der Figur 6 ist eine der Halbschalen 63 dargestellt, die in einer quer zur Montageachse 36 ausgerichteten, nicht dargestellten Querschnittsebene einen im Wesentlichen U-förmigen Querschnitt aufweist. Bei der Herstellung der Ventilpatrone 32 kann in einem ersten Arbeitsschritt zunächst ein als Justiermittel ausgebildetes Stützelement 65 in die Halbschale 63 eingelegt werden. Das Stützelement 65 ist exemplarisch als Blechbiegeteil aus Metall, insbesondere Federstahl, hergestellt. Das Stützelement 65 weist eine im Wesentlichen rechteckige Kontur auf, wobei eine Materialstärke des Stützelements 65 erheblich kleiner als die größten Oberflächen des Stützelements 65 gewählt ist. In einem mittleren Abschnitt weist das Stützelement 65 exemplarisch zwei, vorzugsweise spiegelsymmetrisch zu einer nicht dargestellten Spiegelachse ausgebildete, Ausklinkungen 66, 67 auf, durch die zwei Stützstege 68, 69 freigestellt werden. Diese Stützstege 68, 69 sind jeweils gleichsinnig gekrümmt ausgebildet und ragen über die größte Oberfläche des Stützelements 65 hinaus, die der Halbschale 63 abgewandt ist. In der Halbschale 63 ist ein auf die Geometrie des Stützelements 65 angepasster, vorliegend also rechteckiger Aufnahmeschacht 70, ausgebildet, in den das Stützelement 65 derart aufgenommen werden kann, dass lediglich die Stützstege 68, 69 über die Innenoberfläche 72 der unteren Halbschale 63 hinausragen. Im Bereich des Aufnahmeschachts 70 ist die Halbschale 63 zudem von einer Ausnehmung 71 durchsetzt, die in nachstehend näher beschriebener Weise zur Justierung des Stützmittels 65 verwendet werden kann.

Nachdem das Stützmittel 65 in den Aufnahmeschacht 70 eingelegt wurde, kann in einem nachfolgenden Montageschritt ein exemplarisch als piezoelektrischer Biegewandler 75 ausgebildetes Ventilmittel in die Halbschale 63 eingelegt werden. Der Biegewandler 75 umfasst einen Träger 76, der vorzugsweise aus Metall hergestellt sein kann, sowie eine auf den Träger 76 aufgebrachte, beispielsweise auflaminierte, Beschichtung 77 aus einem piezoelektrischen Material. Der Biegewandler 75 ist an einem hinteren Ende mit einer Anschlussleiterplatte 78 mechanisch und elektrisch gekoppelt, die für eine Bereitstellung einer elektrischen Spannung an die Beschichtung 77 ausgebildet ist, um eine Krümmung des Biegewandlers 75 in einer Bewegungsebene 80 zu bewirken. An einem vorderen Ende des Biegewandlers 75, das nach Montage in die Halbschale 63 im Gegensatz zum hinteren Ende frei beweglich bleibt, ist an der der unteren Halbschale 63 abgewandten Oberfläche der Beschichtung 77 eine exemplarisch zylinderabschnittsförmig ausgebildete Dichtung 79 angebracht, insbesondere aufgeklebt. Die Dichtung 79 ist vorzugsweise aus einem gummielastischen Material hergestellt.

Vorzugsweise ist die Beschichtung 77 derart ausgebildet, dass sie sich bei Anlegen einer elektrischen Spannung zusammenzieht. Dementsprechend ist angesichts der nachstehend näher beschriebenen Anordnung des Düsenblocks 54 gegenüber dem Biegewandler 75 bei Anbringung der Beschichtung 77 auf der der Halbschale 63 abgewandten Oberfläche des Träger 76 eine Krümmungsverstärkung bei Anlegen einer elektrischen Spannung vorgesehen. Somit handelt es sich bei einem derart montierten Biegewandler 75 um ein normal offenes (NO - normal open) Ventilmittel. Für ein normal geschlossenes Ventilmittel muss der Biegewandler 75 lediglich in gespiegelter Anordnung montiert werden, so dass die Beschichtung 77 der Halbschale 63 zugewandt ist.

Nachdem der Biegewandler 75 in die Halbschale 63 eingelegt wurde, wird in einem nachfolgenden Arbeitsschritt ein Federblech 81 auf den Biegewandler 75 aufgelegt. Das Federblech 81 umfasst einen vorderen Niederhalter 82 sowie zwei hintere Niederhalter 83, 84, die sämtlich zur Auflage auf der größten Oberfläche des Biegewandlers 75 vorgesehen sind. Das Federbelch 81 umfasst auch zwei seitlich in einander entgegengesetzten Richtungen abragende Sperrzungen 85, 86, die für eine kraftschlüssige Verrastung des Federblechs 81 in der unteren Halbschale 63 ausgebildet sind. Hierzu weist die Halbschale 63 an den seitlichen Schenkeln jeweils Nuten 87, 88 auf, in die die Sperrzungen 85, 86 bei der Montage eingreifen und sich hierbei im Material der unteren Halbschale 63 verkrallen. Durch die Montage des Federblechs 81 wird der hintere Endbereich des Biegewandlers 75 an der unteren Halbschale 63 festgelegt während der vordere Endbereich des Biegewandlers 75, der die Dichtung 79 trägt, aufgrund einer Krafteinleitung durch den vorderen Niederhalter 82 in eine vorgebbare Position gebracht wird. Die nunmehr entstandene Ventilpatronenbaugruppe 89 wird mit einer, exemplarisch identisch ausgebildeten, zweiten Ventilpatronenbaugruppe 89 gemäß der Darstellung der Figur 7 montiert. Hierbei werden zwischen die beiden Ventilpatronenbaugruppen 89 noch der Düsenblock 54 und ein Kontaktblock 90 eingelegt. Der Kontaktblock 90 weist mehrere Leiterbahnen 91 auf, die elektrisch mit Steckpfosten 92 verbunden sind. Anschließend werden die beiden Ventilpatronenbaugruppen 89 miteinander verbunden, vorzugsweise durch stoffschlüssiges Verbinden, insbesondere durch Verschweißen oder Verkleben. Anschließend werden durch einen Lötvorgang, beispielsweise unter Verwendung eines Bügellöters, der durch hierfür vorgesehene Ausnehmungen 93 in thermisch leitenden Kontakt mit den Anschlussleiterplatten 78 gebracht werden kann, die elektrischen Verbindungen zwischen den Anschlussleiterplatten 78 und den zugeordneten Leiterbahnen 91 des Kontaktblocks 90 hergestellt. In einem abschließenden Montageschritt werden noch eine an den Querschnitt der Ventilpatrone 32 angepasste Dichtung 94 aus gummielastischem Material und ein formstabiler Dichtungshalter 95 auf den hinteren Endbereich des Kontaktblocks 90 der Ventilpatrone 32 aufgeschoben. Der Dichtungshalter 95 weist eine Ausnehmung 96 auf, deren freier Querschnitt derart ausgebildet ist, dass der Dichtungshalter 95 durch Aufpressen formschlüssig am Kontaktblock 90 festgelegt wird. Ergänzend oder alternativ kann noch ein stoffschlüssiger Verbindungsvorgang zwischen den Halbschalen 63 und dem Dichtungshalter 95, beispielsweise durch Verschweißen oder Verkleben, vorgesehen sein.

In einem nachfolgenden Arbeitsschritt kann nunmehr eine Funktionsprüfung für die fertig montierte Ventilpatrone 32 vorgesehen werden. Hierbei werden die Biegewandler 75 durch Bereitstellung elektrischer Spannung an den Steckpfosten 92 aus der Ruhestellung, die durch das Federblech 81 maßgeblich mitbestimmt wird, in eine Funktionsstellung gebracht. Möglicherweise findet vor und/oder nach der Funktionsprüfung eine Justierung der Biegewandler 75 statt. Dies kann exemplarisch dadurch erfolgen, dass mit Hilfe eines Laserstrahls, der durch die Ausnehmung 71 hindurch auf die Oberfläche des Stützelements 65 gerichtet wird, eine plastische Krümmungsänderung des Stützelements 65 herbeigeführt wird. Durch diese Krümmungsänderung wird die Abstützkraft, die vom Stützelement 65 auf den Biegewandler 75 eingeleitet wird, verändert, so dass sich die Vorzugsstellung des Biegewandlers 75 in der Ruhestellung einstellen lässt.

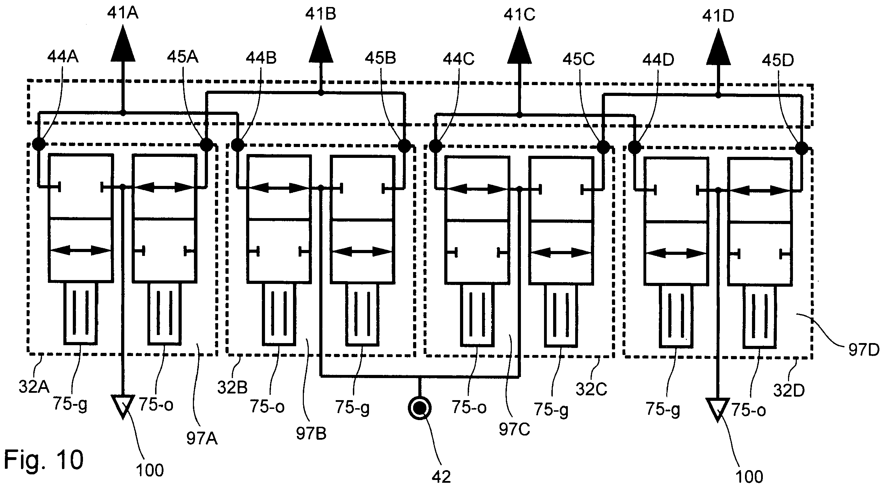

Beim Einschieben der nunmehr fertiggestellten Ventilpatrone 32 in den zugehörigen Ventilschacht 33 wird durch die abdichtende Anlage der Ausgangsanschlüsse 44, 45 in den zylindrischen Ausnehmungen 48, 49 und durch die abdichtende Anlage der Dichtung 94 an der Außenoberfläche der Ventilpatrone 32 und an der Innenoberfläche des Ventilschachts 33 ein abgedichteter Druckraum 97 bestimmt, wie er in der Figur 10 schematisch dargestellt ist.

Bei dem in den Figuren 2 und 10 dargestellten Ausführungsbeispiel eines Ventilmoduls 2 ist eine Verbindung zwischen dem Versorgungsanschluss 42 und den beiden innen angeordneten Ventilschächten 33B und 33C vorgesehen. Dadurch können die jeweiligen Druckräume 97B und 97C mit einem am Versorgungsanschluss 42 bereitgestellten druckbeaufschlagten Fluid geflutet werden und die Ventilmittel 75 der Ventilpatronen 32B und 32C dienen bei einer pneumatischen Anwendung als Belüftungsventile.

Die außen angeordneten Druckräume 97A und 97D weisen an einem der Abschlussplatte 37 abgewandten Endbereich jeweils einen in der Figur 10 schematisch dargestellten Ablasskanal 100 auf, der eine Fluidabfuhr aus den zugeordneten Druckräumen 97A und 97D in die Umgebung ermöglicht. Die Ventilmittel 75 der Ventilpatronen 32A und 32D dienen bei einer pneumatischen Anwendung als Entlüftungsventile.

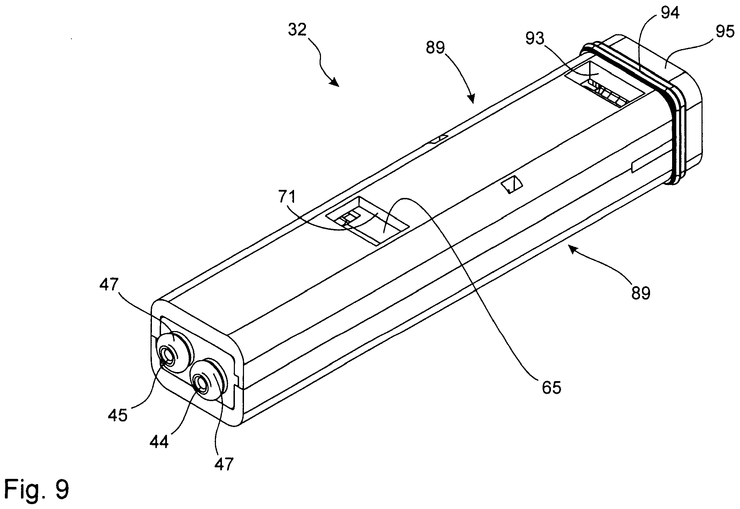

In der Figur 9 ist eine Übersichtsdarstellung der fertiggestellten Ventilpatrone 32 gezeigt, bei der die Ausgangsanschlüsse 44, 45 bereits mit den zugehörigen Dichtmitteln 47 versehen sind und am hinteren Ende der Ventilpatrone 32 die Dichtung 94 und der Dichtungshalter 95 aufgeschoben und festgelegt sind.

Exemplarisch ist in der Figur 10 eine vorteilhafte pneumatische Verschaltungsmöglichkeit für die Ventilpatronen 32 dargestellt. Da jede der Ventilpatronen 32A, 32B, 32C und 32D jeweils zwei Biegewandler 75 umfasst und jeder der Biegewandler 75 genau einem der Ausgangsanschlüsse 44A, 44B, 44C, 44D, 45A, 45B, 45C, 45D zugeordnet ist, kann an den Arbeitsanschlüssen 41A, 41B, 41C und 41D wahlweise eine Druckbeaufschlagung mit einem ersten oder einem zweiten Druckniveau gewährleistet werden. Exemplarisch sind in jeder der Ventilpatronen 32 jeweils ein erster Biegewandler 75-g, der bezüglich des zugeordneten Ausgangsanschlusses 44 oder 45 eine geschlossene Ruhestellung (NC - normal closed) und ein zweiter Biegewandler 75-o, der bezüglich des zugeordneten Ausgangsanschlusses 44 oder 45 eine offene Ruhestellung (NO - normal open) einnimmt, vorgesehen.

Vorliegend sind bei der Figur 10 die Ausgangsanschlüsse 45A, 44B, 44C und 45D in der Ruhestellung der Biegewandler 75 geöffnet, während die Ausgangsanschlüsse 44A, 45B, 45C und 44D in der Ruhestellung der Biegewandler geschlossen sind. Da bei der Anordnung gemäß Figur 10 vorgesehen ist, dass die Ventilpatronen 32 A und 32 D als Entlüftungsventile dienen und für eine Abfuhr von druckbeaufschlagtem Fluid von den jeweiligen Arbeitsanschlüssen 41 ausgebildet sind, liegt exemplarisch an den Arbeitsanschlüssen 41B und 41D ein Entlüftungsdruck an, der insbesondere einem Umgebungsdruck für die Ventilscheibe 1 entsprechen kann. Demgegenüber liegt exemplarisch an den Arbeitsanschlüssen 41A und 41C der am Versorgungsanschluss 42 bereitgestellte Versorgungsdruck an. Hierzu sind die zugeordneten Ventilpatronen 32B und 32C hinsichtlich ihrer Biegewandler 75 derart ausgestaltet, dass im Ruhezustand eine kommunizierende Verbindung zwischen dem Versorgungsanschluss 42 und den Ausgangsanschlüssen 44B und 44C und den zugeordneten Arbeitsanschlüssen 41A und 41C gewährleistet ist. Bei einer nicht dargestellten Funktionsstellung werden jeweils diejenigen Biegewandler 75 geschaltet, die einem der Arbeitsanschlüsse 41 zugeordnet sind, so dass beispielsweise einer oder beide der Arbeitsanschlüsse 41A, 41C von der Belüftungsstellung in eine Entlüftungsstellung gebracht werden können und/oder einer oder beide der Arbeitsanschlüsse 41B, 41D von der Entlüftungsstellung in eine Belüftungsstellung gebracht werden können.

Die Schnittdarstellung eines Hauptventils 101 gemäß der Figur 11 zeigt den exemplarisch zweiteilig ausgebildeten Hauptventilkörper 34, der schiebebeweglich in der Ventilausnehmung 35 des Hauptventilgehäuses 8 aufgenommen ist. Der Hauptventilkörper 34 umfasst ein Ventilglied 102 und ein Stellglied 103, die fest miteinander verbunden sind. Hierzu sind am Stellglied 103 ein Gewindeabschnitt 104 und im Ventilglied 102 ein korrespondierendes Gewindesackloch 105 ausgebildet. Der Hauptventilkörper 34 ist schiebebeweglich in einem Ventileinsatz 106 geführt, der seinerseits in der Ventilausnehmung 35 festgelegt ist und der einen ringförmigen Ventilsitz 107 umfasst. Da der Ventilkörper 34 für die Beeinflussung eines freien Strömungsquerschnitts durch einen vom Ventilsitz 107 berandeten Strömungskanal 108 dient, ist zwischen dem Ventilglied 102 und dem Stellglied 103 eine ringförmig umlaufende Dichtscheibe 109 angeordnet, die in der Ruhestellung gemäß der Figur 11 für eine abdichtende und damit den Strömungskanal 108 blockierende Anlage am Ventilsitz 107 ausgebildet ist. Sowohl das Ventilglied 102 als auch das Stellglied 103 sind exemplarisch gegenüber dem Ventileinsatz 106 jeweils mit einem Lippendichtring 110, 111 abgedichtet und begrenzen somit zusammen mit dem Ventileinsatz 106 und dem Hauptventilgehäuse 8 einen Druckraum 112. Der Druckraum 112 steht über eine Ausnehmung 113 mit einer ersten Ausnehmung aus der Gruppe der Ausnehmungen 15 bis 20 gemäß der Figur 2 in Verbindung. Zudem steht der Druckraum 112 über eine Ausnehmung 114 mit einer zweiten Ausnehmung aus der Gruppe der Ausnehmungen 15 bis 20 gemäß der Figur 2 in Verbindung. Durch die Wechselwirkung zwischen Ventilglied 102 und Ventilsitz 107 kann eine fluidisch kommunizierende Verbindung zwischen der Ausnehmung 113 und der Ausnehmung 114 längs des Strömungskanals 108 wahlweise freigegeben oder blockiert werden.

Dem Ventilglied 102 ist an einem dem Stellglied 103 abgewandten Endbereich eine Druckfeder 115 zugeordnet, die vorliegend in der Ruhestellung des Hauptventils 101 eine Blockierung des Strömungskanals 108 vorgibt. Für eine Freigabe des Strömungskanals 108 ist eine translatorische Relativbewegung des Ventilglieds 102 und des damit gekoppelten Stellglieds 103 längs der Mittelachse 116 des Hauptventils 101 erforderlich, hierbei muss die Rückstellkraft der Druckfeder 115 überwunden werden. Hierzu ist das Stellglied 103 in einer durch den Ventileinsatz 106 und eine Abschlussplatte 117 bestimmten Vorsteuerkammer 118 aufgenommen. In der Abschlussplatte 118 ist ein Arbeitskanal 119 ausgebildet, durch den eine Fluidzufuhr und Fluidabfuhr in die bzw. aus der Vorsteuerkammer 118 erfolgen kann. Für eine vorteilhafte Abdichtung zwischen dem Druckraum 112 und der Vorsteuerkammer 118 ist zwischen dem Ventileinsatz 106 und der Abschlussplatte 118 eine Dichtmembran 120 eingefügt. Somit wird bei einer Druckbeaufschlagung der Vorsteuerkammer 118 eine Auslenkung des Stellglieds 103 und des damit gekoppelten Ventilglieds 102 bewirkt, wodurch die Dichtscheibe 109 vom Ventilsitz 107 abgehoben wird und der Strömungskanal 108 durch den Druckraum 112 freigegeben wird. Das hierzu benötigte druckbeaufschlagte Fluid kann beispielsweise von einem der Arbeitsanschlüsse 41 des Ventilmoduls 2 bereitgestellt werden.

## Patentansprüche

1. Ventileinrichtung zur Beeinflussung einer Fluidversorgung fluidisch betreibbarer Verbraucher, mit einem Ventilmodul (2), das ein Ventilgehäuse (4) umfasst, in dem Ventilschächte (33) zur Aufnahme von Ventilpatronen (32) ausgebildet sind, sowie mit Ventilpatronen (32), die in den Ventilschächten (33) angeordnet sind, wobei die Ventilschächte (33) zusammen mit den darin aufgenommenen Ventilpatronen (32) jeweils einen Druckraum (97) begrenzen, der in fluidisch kommunizierender Verbindung mit einem zugeordneten Eingangsanschluss (42, 100) steht und wobei die Ventilpatronen (32) jeweils zwei Ventilmittel (75) umfassen, die jeweils separat elektrisch angesteuert sind und die jeweils dazu ausgebildet sind, einen freien Strömungsquerschnitt zwischen dem Druckraum (97) und einem dem jeweiligen Ventilmittel (75) zugeordneten Ausgangsanschluss (44, 45) zu beeinflussen.

2. Ventileinrichtung nach Anspruch 1, **dadurch gekennzeichnet, dass** die Ventilmittel (75) in der Ventilpatrone (32) in einer gemeinsamen Bewegungsebene (80) zwischen einer Sperrstellung und einer Freigabestellung bewegbar, insbesondere schwenkbeweglich bewegbar, sind, um den jeweiligen freien Strömungsquerschnitt zum zugeordneten Ausgangsanschluss (44, 45) zu beeinflussen.

3. Ventileinrichtung nach Anspruch 1 oder 2, **dadurch gekennzeichnet, dass** ein am Ventilgehäuse (4) ausgebildeter Arbeitsanschluss (41), der für eine fluidisch kommunizierende Verbindung mit einem fluidischen betreibbaren Verbraucher (101) ausgebildet ist, jeweils mit einem Ausgangsanschluss (44, 45) einer ersten Ventilpatrone (32) und einem Ausgangsanschluss (44, 45) einer zweiten Ventilpatrone (32) fluidisch kommunizierend verbunden ist, um am Arbeitsanschluss (41) wahlweise eine fluidisch kommunizierende Verbindung mit dem Druckraum (97) der ersten oder der zweiten Ventilpatrone (32) zu ermöglichen.

4. Ventileinrichtung nach Anspruch 1, 2 oder 3, **dadurch gekennzeichnet, dass** die Ventilmittel (75) jeweils einen ersten, an der Ventilpatrone festgelegen Endbereich und einen zweiten, frei beweglich, insbesondere schwenkbeweglich, ausgebildeten Endbereich aufweisen, der in der Sperrstellung für eine abdichtende Anlage an einem Ventilsitz (61, 62) und in der Freigabestellung für eine Freigabe des Ventilsitzes (61, 62) ausgebildet ist, wobei der Ventilsitz (61, 62) als Mündungsöffnung (59, 60) eines Ausgangskanals (55, 56) ausgebildet ist, der in den Druckraum (97) mündet und mit einem Ausgangsanschluss (44, 45) verbunden ist.

5. Ventileinrichtung nach Anspruch 4, **dadurch gekennzeichnet, dass** die Ventilmittel (75) als piezoelektrische Biegewandler ausgebildet sind.

6. Ventileinrichtung nach Anspruch 5, **dadurch gekennzeichnet, dass** der Biegewandler (75) beabstandet zum ersten Endbereich auf einem Justiermittel (65) aufliegt, das an der Ventilpatrone (32) abgestützt ist und das zur Einstellung einer Vorzugslage des frei beweglichen Endbereichs des Biegewandlers (75) in der Bewegungsebene (80) ausgebildet ist.

7. Ventileinrichtung nach Anspruch 6, **dadurch gekennzeichnet, dass** das Justiermittel (75) in der Bewegungsebene (80) eine Krümmung aufweist, die zur Einstellung der Vorzugslage des frei beweglichen Endbereichs des Biegewandlers (75) einstellbar ist, insbesondere durch lokale Energiezufuhr mittels eines Energiestrahls.

8. Ventileinrichtung nach Anspruch 5, 6 oder 7, **dadurch gekennzeichnet, dass** dem Biegewandler (75) ein Federmittel (81) zur Bereitstellung einer in der Bewegungsebene (80) wirkenden Andruckkraft auf das Justiermittel (65) zugeordnet ist.

9. Ventileinrichtung nach einem der vorhergehenden Ansprüche, **dadurch gekennzeichnet, dass** die Ausgangsanschlüsse (44, 45) an einer vorderen Stirnfläche der Ventilpatrone (32) angeordnet sind und/oder dass benachbart zu einer hinteren Stirnfläche der Ventilpatrone (32) ein umlaufendes, insbesondere gummielastisch ausgebildetes, Dichtelement (94) zur abdichtenden Aufnahme der Ventilpatrone (32) im Ventilschacht (33) ausgebildet ist

10. Ventileinrichtung nach einem der vorhergehenden Ansprüche, **dadurch gekennzeichnet, dass** an einer hinteren Stirnfläche der Ventilpatrone (32) eine Kontakteinrichtung (90) angeordnet ist, die für eine elektrische Verbindung zwischen den elektrisch ansteuerbaren Ventilmitteln (75) und einer, insbesondere als Busteilnehmer in einem Bussystem konfiguierbaren, Ansteuerschaltung ausgebildet sind.

11. Ventileinrichtung nach einem der vorhergehenden Ansprüche, **dadurch gekennzeichnet, dass** jeweils zwei Ventilpatronen (32) fluidisch zu zwei 3/3-Wegeventilen verbunden sind.

12. Ventileinrichtung nach einem der vorhergehenden Ansprüche, **dadurch gekennzeichnet, dass** ein Hauptventilmodul (3) wenigstens ein fluidisch ansteuerbares Hauptventil (101) aufweist, das ein beweglich in einem Ventilraum (35, 112) aufgenommenes Ventilglied (102) und ein mit dem Ventilglied (102) gekoppeltes, beweglich in einer Vorsteuerkammer (118) aufgenommenes Stellglied (103) umfasst, wobei die Vorsteuerkammer (118) mit einem Arbeitsanschluss (41) des Ventilmoduls (2) verbunden ist und eine Position des Stellglieds (103) und des damit gekoppelten Ventilglieds (102) in Abhängigkeit von einer Druckbeaufschlagung der Vorsteuerkammer (118) einstellbar ist, um mittels des Ventilglieds (102) einen freien Strömungsquerschnitt im Ventilraum (35, 112) einzustellen.

13. Ventileinrichtung nach Anspruch 12, **dadurch gekennzeichnet, dass** dem Ventilglied (102) und/oder dem Stellglied (103) eine Federeinrichtung (115) für eine Bereitstellung einer Federkraft zugeordnet ist, um eine Vorzugsstellung des Ventilglieds (102) im Ventilraum (35, 112) zu bestimmen.

14. Ventileinrichtung nach Anspruch 12 oder 13, **dadurch gekennzeichnet, dass** jeweils ein Ventilmodul (2) und ein Hauptventilmodul (3) eine Ventilscheibe (1) bilden, die längs einer Aufreihungsachse (21) mit einer größten Außenfläche an eine benachbarte Ventilscheibe (1) anreihbar ist, wobei die Ventilscheibe (1) von wenigstens einer längs der Aufreihungsachse (21) erstreckten Ausnehmung (15, 16, 17, 18, 19, 20) durchsetzt ist, die zur Bildung eines Fluidkanals vorgesehen ist.

15. Ventileinrichtung nach Anspruch 14, **dadurch gekennzeichnet, dass** an einer Schmalseite (5, 9) der Ventilscheibe wenigstens ein Kontaktmittel (11, 12) abragt, das für eine elektrische Verbindung des Ventilmoduls (2) und/oder des Hauptventilmoduls (3) mit einer elektronischen Ansteuerschaltung und/oder mit einer elektronische Steuereinrichtung ausgebildet ist.

## Claims

1. Valve device for influencing a fluid supply of fluid-operated loads, comprising a valve module (2) with a valve housing (4) in which valve shafts (33) are formed to accommodate valve cartridges (32), and further comprises valve cartridges (32) located in the valve shafts (33), wherein each of the valve shafts (33) together with the valve cartridges (32) accommodated therein bounds a pressure chamber (97) connected to an assigned inlet port (42, 100) in a fluidically communicating manner, and wherein each of the valve cartridges (32) comprises two valve means (75) which are separately electrically controlled and which are designed to influence a free flow cross-section between the pressure chamber (97) and an outlet port (44, 45) assigned to the respective valve means (75).

2. Valve device according to claim 1, **characterised in that** the valve means (75) in the valve cartridge (32) are movable, in particular pivotable, in a common movement plane (80) between a blocking position and a release position for influencing the respective free flow cross-section to the associated outlet port 44, 45).

3. Valve device according to claim 1 or 2, **characterised in that** an operating port (41) which is formed on the valve housing (4) and which is designed for a fluidically communicating connection to a fluid-operated load (101) is connected in a fluidically communicating manner to an outlet port (44, 45) of a first valve cartridge (32) and to an outlet port (44, 45) of a second valve cartridge (32) for optionally establishing at the operating port (41) a fluidically communicating connection to the pressure chamber (97) of the first or the second valve cartridge (32).

4. Valve device according to claim 1, 2 or 3, **characterised in that** each of the valve means (75) has a first end region located on the valve cartridge and a second end region which is freely movable, in particular pivotable, and which is designed for a sealing contact with a valve seat (61, 62) in the blocking position and for releasing the valve seat (61, 62) in the release position, wherein the valve seat (61, 62) is designed as a terminating orifice (59, 60) of an outlet passage (55, 56) which terminates into the pressure chamber (97) and is connected to an outlet port (44, 45).

5. Valve device according to claim 4, **characterised in that** the valve means (75) are designed as piezoelectric bending transducers.

6. Valve device according to claim 5, **characterised in that** the bending transducer (75) lies, at a distance from the first end region, on an adjusting means (65) which is supported on the valve cartridge (32) and which is designed for setting a preferred position of the freely movable end region of the bending transducer (75) in the movement plane (80).

7. Valve device according to claim 6, **characterised in that** the adjusting means (75) has in the movement plane (80) a curvature which can be adjusted for adjusting the preferred position of the freely movable end region of the bending transducer (75), in particular by local energy supply by means of an energy beam.

8. Valve device according to claim 5, 6 or 7, **characterised in that** a spring means (81) for providing a pressing force acting on the adjusting means (65) in the movement plane (80) is assigned to the bending transducer (75).

9. Valve device according to any of the preceding claims, **characterised in that** the outlet ports (44, 45) are located on a front end face of the valve cartridge (32) and/or **in that**, adjacent to a rear end face of the valve cartridge (32), a continuous, in particular rubber-elastic, sealing element (94) is formed for the sealed accommodation of the valve cartridge (32) in the valve shaft (33).

10. Valve device according to any of the preceding claims, **characterised in that** a contact device (90), which is designed for an electric connection between the electrically controllable valve means (75) and a control circuit which is in particular designed for configuration in a bus system as a bus subscriber, is located on a rear end face of the valve cartridge (32).

11. Valve device according to any of the preceding claims, **characterised in that** two each of the valve cartridges (32) are fluidically connected to form two 3/3-way valves.

12. Valve device according to any of the preceding claims, **characterised in that** a main valve module (3) has at least one fluidically controllable main valve (101) which comprises a valve member (102) movably accommodated in a valve chamber (35, 112) and an actuator (103) coupled to the valve member (102) and movably accommodated in a pilot chamber (118), wherein the pilot chamber (118) is connected to an operating port (41) of the valve module (2) and a position of the actuator (103) and the valve member (102) coupled thereto is adjustable as a function of a pressure applied to the pilot chamber (118), in order to adjust a free flow cross-section in the valve chamber (35, 112) by means of the valve member (102).

13. Valve device according to claim 12, **characterised in that** a spring device (115) is assigned to the valve member (102) and/or to the actuator (103) in order to provide a spring force for determining a preferred position of the valve member (102) in the valve chamber (35, 112).

14. Valve device according to claim 12 or 13, **characterised in that** one valve module (2) and one main valve module (3) each form a valve slice (1) which can be lined up along a line-up axis (21) with an adjacent valve slice (1) with its largest outer surface, wherein at least one recess (15, 16, 17, 18, 19, 20) extending along the line-up axis (21) passes through the valve slice (1) to form a fluid passage.

15. Valve device according to claim 14, **characterised in that** at least one contact means (11, 12) designed for an electric connection of the valve module (2) and/or the main valve module (3) to an electronic control circuit and/or to an electronic control unit projects at a narrow side (5, 9) of the valve slice.

## Revendications

1. Dispositif de vanne servant à agir sur une alimentation en fluide de consommateurs fonctionnant avec un fluide, comprenant un module de soupape (2), qui comprend un boîtier de soupape (4), dans lequel sont disposées des cages de soupe (33) servant à recevoir des cartouches de soupape (32), comprenant également des cartouches de soupape (32), qui sont disposées dans les cages de soupape (33), dans lequel les cages de soupape (33) délimitent ensemble, avec les cartouches de soupape (32) reçues dans ces dernières, respectivement un espace de pression (97), qui se trouve en communication fluidique avec un raccord d'entrée (42, 100) associé et dans lequel les cartouches de soupape (32) comprennent respectivement deux moyens de soupape (75), qui sont commandés de manière électrique respectivement séparément et qui respectivement sont réalisés afin d'agir sur une section transversale d'écoulement libre entre l'espace de pression (97) et un raccord de sortie (44, 45) associé au moyen de soupape (75) respectif.

2. Dispositif de vanne selon la revendication 1, **caractérisé en ce que** les moyens de soupape (75) dans la cartouche de soupape (32) peuvent être déplacés, en particulier par un déplacement de pivotement, dans un plan de déplacement (80) commun entre une position de blocage et une position de déblocage, afin d'agir sur la section transversale d'écoulement respective libre par rapport au raccord de sortie (44, 45) associé.

3. Dispositif selon la revendication 1 ou 2, **caractérisé en ce qu'**un raccord de travail (41) réalisé au niveau du boîtier de soupape (4), qui est réalisé en vue d'une communication fluidique avec un consommateur (101) fonctionnant avec un fluide, est en communication fluidique respectivement avec un raccord de sortie (44, 45) d'une première cartouche de soupape (32) et avec un raccord de sortie (44, 45) d'une deuxième cartouche de soupape (32) afin de permettre, au niveau du raccord de travail (41), au choix une communication fluidique avec l'espace de pression (97) de la première ou de la deuxième cartouche de soupape (32).

4. Dispositif de soupape selon la revendication 1, 2, ou 3, **caractérisé en ce que** les moyens de soupape (75) présentent, respectivement une première zone d'extrémité fixée au niveau de la cartouche de soupape et une deuxième zone d'extrémité réalisée de manière à se déplacer librement, en particulier de manière à se déplacer par pivotement, laquelle zone d'extrémité est réalisée en vue d'un appui étanche au niveau d'un siège de soupape (61, 62) dans la position de blocage et en vue d'un déblocage du siège de soupape (61, 62) dans la position de déblocage, dans lequel le siège de soupape (61, 62) est réalisé sous la forme d'une ouverture d'embouchure (59, 60) d'un canal de sortie (55, 56), qui débouche dans l'espace de pression (97) et qui est relié à un raccord de sortie (44, 45).

5. Dispositif de soupape selon la revendication 4, **caractérisé en ce que** les moyens de soupape (75) sont réalisés sous la forme d'un transducteur piézoélectrique.

6. Dispositif de soupape selon la revendication 5, **caractérisé en ce que** le transducteur (75) repose sur un moyen d'ajustement (65) à distance par rapport à la première zone d'extrémité, lequel moyen d'ajustement prend appui au niveau de la cartouche de soupape (32) et qui est réalisé afin de régler une position de prédilection de la zone d'extrémité pouvant se déplacer librement du transducteur (75) dans le plan de déplacement (80).

7. Dispositif de soupape selon la revendication 6, **caractérisé en ce que** le moyen d'ajustement (75) présente, dans le plan de déplacement (80), une incurvation, qui peut être réglée afin de régler la position de prédilection de la zone d'extrémité pouvant se déplacer librement du transducteur (75), en particulier par un apport d'énergie local au moyen d'un rayonnement d'énergie.

8. Dispositif de soupape selon la revendication 5, 6 ou 7, **caractérisé en ce qu'**un moyen de ressort (81) servant à fournir une force de compression exerçant un effet dans le plan de déplacement (80) sur le moyen d'ajustement (65) est associé au transducteur (75).

9. Dispositif de soupape selon l'une quelconque des revendications précédentes, **caractérisé en ce que** les raccords de sortie (44, 45) sont disposés au niveau d'une surface frontale avant de la cartouche de soupape (32), et/ou **en ce qu'**un élément étanche (94) périphérique réalisé en particulier de manière élastique comme de la gomme, servant à recevoir de manière étanche la cartouche de soupape (32) est réalisé dans la cage de soupape (33) de manière adjacente à une surface frontale arrière de la cartouche de soupape (32).

10. Dispositif de soupape selon l'une quelconque des revendications précédentes, **caractérisé en ce qu'**est disposé, au niveau d'une surface frontale arrière de la cartouche de soupape (32), un dispositif de contact (90), qui est réalisé en vue d'une liaison électrique entre les moyens de soupape (75) pouvant être commandés de manière électrique et un circuit de pilotage pouvant être configuré en particulier sous la forme d'un abonné de bus dans un système de bus.

11. Dispositif de soupape selon l'une quelconque des revendications précédentes, **caractérisé en ce que** respectivement deux cartouches de soupape (32) sont reliés de manière fluidique en deux distributeurs à 3/3 voies.

12. Dispositif de soupape selon l'une quelconque des revendications précédentes, **caractérisé en ce qu'**un module de soupape principal (3) présente au moins une soupape principale (101) pouvant être pilotée de manière fluidique, laquelle comprend un organe de soupape (102) reçu de manière à pouvoir se déplacer dans un espace de soupape (35, 112) et un organe de réglage (103) couplé à l'organe de soupape (102), reçu de manière à pouvoir se déplacer dans une chambre pilote (118), dans lequel la chambre pilote (118) est reliée à un raccord de travail (41) du module de soupape (2) et une position de l'organe de réglage (103) et de l'organe de soupape (102) couplé à ce dernier peut être réglée en fonction d'une application de pression de la chambre pilote (118) afin de régler, au moyen de l'organe de soupape (102), une section transversale d'écoulement libre dans l'espace de soupape (35, 112).

13. Dispositif de soupape selon la revendication 12, **caractérisé en ce qu'**un dispositif de ressort (115) est associé en vue de fournir une force de ressort à l'organe de soupape (102) et/ou à l'organe de réglage (103) afin de déterminer une position de prédilection de l'organe de soupape (102) dans l'espace de soupape (35, 112).

14. Dispositif de soupape selon la revendication 12 ou 13, **caractérisé en ce que** respectivement un module de soupape (2) et un module de soupape principal (3) forment un disque de soupape (1), qui peut être aligné avec un disque de soupape (1) adjacent le long d'un axe d'alignement (21) par une surface extérieure de plus grande taille, dans lequel le disque de soupape (1) est traversé par au moins un évidement (15, 16, 17, 18, 19, 20) étendu le long de l'axe d'alignement (21), lequel évidement est prévu afin de former un canal de fluide.

15. Dispositif de soupape selon la revendication 14, **caractérisé en ce qu'**au moins un moyen de contact (11, 12) dépasse au niveau d'un côté étroit (5, 9) du disque de soupape, lequel est réalisé en vue d'une liaison électrique du module de soupape (2) et/ou du module de soupape principal (3) avec un circuit de pilotage électronique et/ou avec un dispositif de commande électronique.
